Europäisches Patentamt

European Patent Office

Office européen des brevets

(11) Veröffentlichungsnummer : **0 065 722
B1**

(12) **EUROPÄISCHE PATENTSCHRIFT**

(45) Veröffentlichungstag der Patentschrift :
03.04.85

(51) Int. Cl.⁴ : **H 02 P 7/62**

(21) Anmeldenummer : **82104257.9**

(22) Anmeldetag : **14.05.82**

(54) Vorrichtung zur Steuerung oder Regelung sowie Modellschaltung einer Schenkelpolmaschine.

(30) Priorität : 25.05.81 DE 3120797
25.05.81 DE 3120768

(43) Veröffentlichungstag der Anmeldung :
01.12.82 Patentblatt 82/48

(45) Bekanntmachung des Hinweises auf die Patenterteilung : 03.04.85 Patentblatt 85/14

(84) Benannte Vertragsstaaten :
AT BE CH DE FR GB IT LI NL SE

(56) Entgegenhaltungen :
EP-A- 0 043 973
FR-A- 2 144 343
FR-A- 2 241 910
SIEMENS ZEITSCHRIFT, Band 45, Heft 10, Oktober
1971, Seiten 765-768, Erlangen, DE. K.H. BAYER et
al.: "Die TRANSVEKTOR-Regelung für den feldorientierten Betrieb einer Synchronmaschine"
SIEMENS FORSCHUNGS- UND ENTWICKLUNGSBE-
RICHTE, Band 3, Nr. 5, 1974, Seiten 327-332, Springer
Verlag, Berlin, DE. F. BLASCHKE et al.: "A new
method of regulation for rotating field machines"

(73) Patentinhaber : Siemens Aktiengesellschaft
Berlin und München Wittelsbacherplatz 2
D-8000 München 2 (DE)

(72) Erfinder : Blaschke, Fellx, Dr.
Steinforststrasse 19
D-8520 Erlangen (DE)
Erfinder : Salzmann, Theodor, Dipl.-Ing.
Leimbergerstrasse 29
D-8520 Erlangen (DE)

EP 0 065 722 B1

**Beschreibung**

Die Erfindung bezieht sich auf eine Vorrichtung zur Steuerung oder Regelung einer Schenkelpolmaschine gemäß dem Oberbegriff des Anspruches 1. Eine derartige Anordnung ist aus der deutschen Offenlegungsschrift 23 42 653 bekannt. Die Erfindung bezieht sich ferner auf Modellschaltungen einer Schenkelpolmaschine gemäß den Oberbegriffen der Ansprüche 9 und 11.

In der deutschen Auslegeschrift 21 32 178 is eine Vorrichtung zur Steuerung oder Regelung einer umrichtergespeisten, selbstgesteuerten Synchronmaschine bekannt, bei der der Sollwert für den als Vektor aufgefaßten Ständerstrom in Form einer mit dem Flußvektor parallelen Komponente und einer dazu senkrechten Komponente vorgegeben wird. In diesem feldorientierten System bestimmt die feldparallele Komponente den Beitrag des Ständerstromes zum Magnetisierungsstrom und kann insbesondere zu Null gesetzt werden. Die feldsenkrechte Komponente bestimmt bei vorgegebenem Fluß das von der Maschine aufgebrachte elektrische Drehmoment und kann insbesondere dazu verwendet werden, um Drehzahl oder Drehmoment zu steuern oder regeln.

Hierzu wird der durch diese « feldorientierten » Komponenten vorgegebene Ständerstrom-Sollvektor in einem Vektordreher entsprechend dem Winkel (Flußwinkel $\varphi$) zwischen dem Flußvektor und einer raumfesten Ständerachse in ein raumfestes (« ständerorientiertes ») Koordinatensystem transformiert und auf die Maschinenklemmen aufgeteilt, so daß der Ständerstrom nun auf diesen Sollvektor gesteuert oder geregelt werden kann. Die Information über den Flußwinkel $\varphi$ wird von einem Flußrechner gebildet, der von dem Istwert des Polradlagewinkels $\lambda_s$ sowie den Istwerten für den Erregerstrom und den Ständerstrom gespeist ist. Der Flußrechner löst die Differentialgleichungen des elektrischen Teils der Maschine unter Verwendung von eingegebenen Maschinenparametern für den Läuferwiderstand und die Hauptinduktivität, wobei im Fall einer Vollpol-Synchronmaschine, deren Hauptinduktivität rotationssymmetrisch ist, nur ein einziger Induktivitätsparameter benötigt wird. Im Fall einer Schenkelpolmaschine ist der durch die Hauptinduktivität gegebene Zusammenhang zwischen dem Fluß und dem Strom der Maschine von der relativen Lage des Flusses zur magnetischen Läuferachse abhängig und muß daher in eine auf die zur Läuferachse parallele Flußkomponente wirkende Längsinduktivität und eine auf die senkrechte Flußkomponente wirkende Querinduktivität aufgespalten werden. Bei der Lösung der erwähnten Differentialgleichungen muß also mit einer vom Flußwinkel abhängigen Hauptinduktivität gerechnet werden.

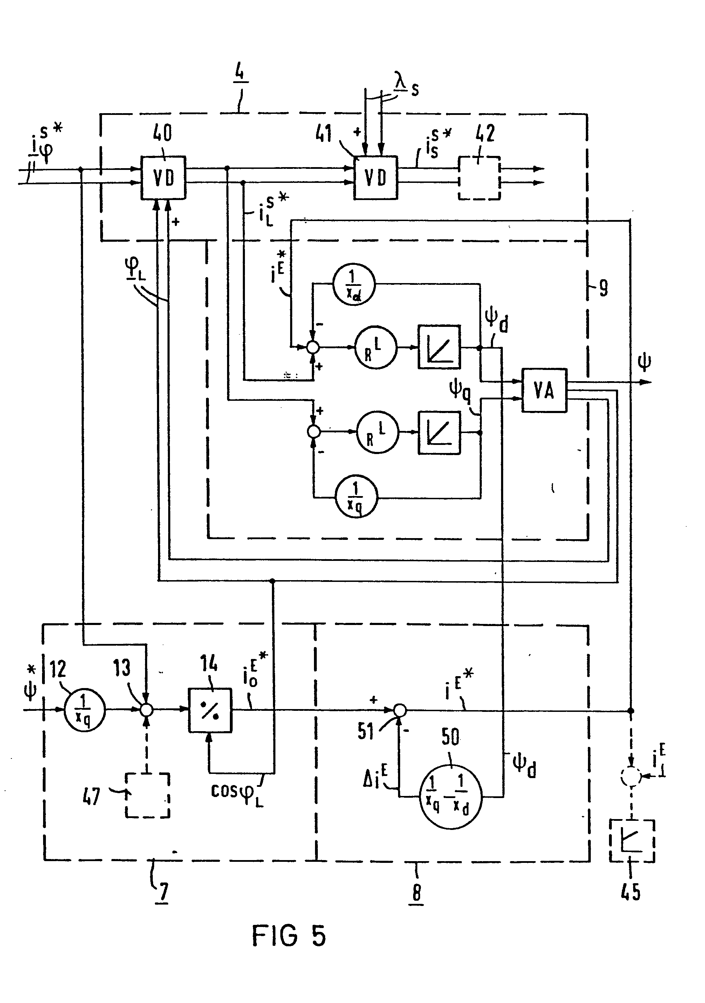

Der dort beschriebene Flußrechner stellt ein Rechenmodell der Maschine dar und arbeitet im läuferorientierten Bezugssystem, in dem der Erregerstrom parallel zur d-Achse ist. Prinzipiell kann der Flußvektor auch mittels Hallsonden direkt erfaßt oder in einem anderen Rechenmodell ermittelt werden, wie es z. B. in Figur 5 der deutschen Patentanmeldung P 30 26 202 und der gemäß Artikel 54(3) zum Stand der Technik gehörenden EP-A-43 973 beschrieben ist. Dieses Modell arbeitet im feldorientierten Koordinatensystem mit einer einheitlichen Hauptinduktivität und gilt daher nur für Vollpolmaschinen. Eine weitere Möglichkeit zur Bestimmung des Flusses besteht darin, die EMK der Maschine aus Motorspannung und Motorstrom zu berechnen und daraus durch Integration den Fluß zu gewinnen (« Spannungsmodell »), wie dies ebenfalls in der erwähnten deutschen Patentanmeldung P 30 26 202 und der EP-A-43 973 beschrieben ist. Die von diesen Rechenmodellen gelieferte Information über den Flußvektor kann nicht nur zur feldorientierten Regelung des Ständerstromes verwendet werden, vielmehr kann der Modell-Flußbetrag dazu herangezogen werden, um über eine Regelung des Erregerstromes den Flußbetrag auf einem konstanten Sollwert zu halten.

In der deutschen Offenlegungsschrift 23 42 653 ist vorgeschlagen, anstelle der Flußregelung oder zusätzlich hierzu den Erregerstrom dadurch vorzusteuern, daß durch Division des Flußsollwertes mit der Hauptinduktivität und Subtraktion des feldparallelen Anteils des Ständerstromsollvektors die feldparallele Komponente $i^{E*} \cdot \cos \varphi_L$ des Erregerstrom-Sollvektors gebildet wird, der nach Division mit dem vom Rechenmodell ermittelten $\cos \varphi_L$ eine Führungsgröße $i^{E*}$ für den Betrag des Erregerstroms gebildet wird. Durch diese Vorsteuerung wird demnach der Erregerstrom von vornherein so vorgegeben, daß unter Berücksichtigung des magnetisierenden Anteils $i_{\varphi1}$ des Ständerstromes die Gesamtdurchflutung bereits dem zum vorgegebenen Flußsollwert $\psi^*$ gehörenden Wert nachgeführt wird. Sofern aus dem Modellfluß und dem Flußsollwert noch zusätzlich die Regelabweichung eines Flußreglers gebildet wird, dient dieser Regler nur dazu, um den Erregerstrom auch bei raschen Änderungen mit einer hohen dynamischen Genauigkeit nachzuführen.

Der dabei ausgenutzte Zusammenhang $i^{\mu} = x \cdot \psi$ zwischen Magnetisierungsstrom $i^{\mu}$ (feldparallele Komponente der Gesamtdurchflutung), Hauptinduktivität $x$ und Flußbetrag $\psi$ gilt nur bei konstanter Induktivität, so daß diese Vorsteuerung für eine Schenkelpolmaschine wegen der Unsymmetrie der Hauptinduktivität nicht anwendbar ist.

Der Erfindung liegt die Aufgabe zugrunde, eine Möglichkeit zu schaffen, bei der auch bei einer Schenkelpolmaschine durch eine geeignete Vorsteuerung des Erregerstromes der Fluß mit hoher dynamischer Genauigkeit auf einen vorgegebenen Flußsollwert eingestellt werden kann. Dadurch wird ein eigener Flußregler überflüssig oder er wird soweit durch die Vorsteuerung des Erregerstromes unterstützt, daß er noch auftretende geringe Abweichungen des Flusses sehr schnell ausregelt.

Der Erfindung geht von der Überlegung aus, daß zunächst ein fiktiver Erregerstromwert gebildet wird, der bei Verwendung einer Vollpolmaschine einen dem vorgegebenen Flußsollwert entsprechenden Erregerstrom liefern würde. Der dabei begangene Fehler wird dann mittels einer Störgröße, die die Abweichung der Schenkelpolmaschine von der fiktiven Vollpolmaschine berücksichtigt, kompensiert. Die Aufgabe wird gelöst durch eine Vorrichtung mit den im Anspruch 1 angegebenen Merkmalen. Die dabei angewendeten Prinzipien finden ferner in Modellschaltungen gemäß den unabhängigen Patentansprüchen 9 und 11 Anwendung. Die abhängigen Ansprüche kennzeichnen vorteilhafte Weiterbildungen der Erfindung.

Anhand von 11 Figuren wird die Erfindung näher erläutert.

Es zeigen :

Figur 1  die Darstellung eines Vektors im ständerorientierten (raumfesten) Bezugssystem a, b sowie im läuferorientierten Bezugssystem d, q und im feldorientierten Bezugssystem $\varphi_1$, $\varphi_2$ ;

Figur 2  eine gemäß der Erfindung gesteuerte Schenkelpolmaschine ;

Figur 3  ein Modell einer Schenkelpolmaschine mit einer als Flußbestimmungseinrichtung bei Figur 2 verwendbaren Modellschaltung ;

Figur 4  eine gemäß der Erfindung geregelte Schenkelpolmaschine ;

Figur 5  ein Steuergerät gemäß der Erfindung mit einer im läuferorientierten Bezugssystem arbeitenden Flußbestimmungseinrichtung ;

Figur 6  eine Modifikation des Geräts nach Figur 5 ;

Figur 7  eine weitere Modifikation des Steuergeräts nach Figur 5 ;

Figur 8  eine Weiterbildung der in Figur 7 als Flußermittlungseinrichtung verwendeten Schaltungsanordnung ;

Figur 9  eine als Rechenmodellschaltung im feldorientierten Bezugssystem arbeitende Flußermittlungseinrichtung ;

Figur 10  eine Figur 9 entsprechende, läuferorientiert rechnende Modellschaltung ; und

Figur 11  eine weitere Modellschaltung zur Ermittlung des zu einem vorgegebenen Fluß gehörenden Erregerstroms.

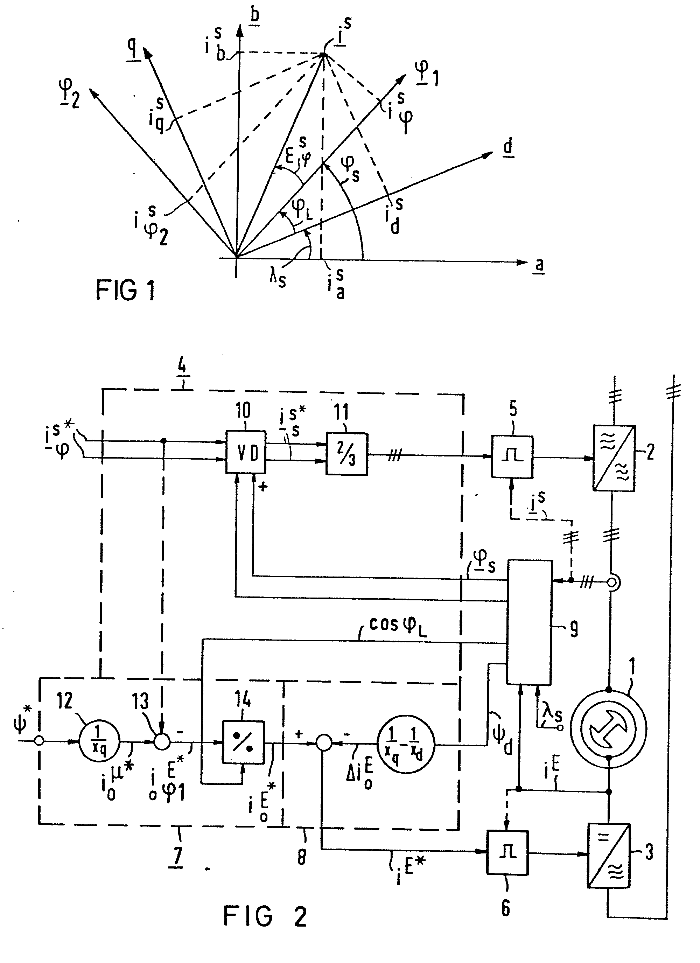

Nach Figur 1 kann ein Vektor, beispielsweise der Ständerstromvektor $i^S$ (Strombetrag $i^S$) in einem ortsfesten, von den Einheitsvektoren a, b aufgespannten Bezugssystem dargestellt werden durch seine beiden ständerorientierten Koordinaten $i_a^S$, $i_b^S$. Diese ständerorientierte Darstellung des Vektors $i^S$ wird mit $i_s^S$ bezeichnet.

Der Läufer rotiert und weist somit einen zeitlich sich verändernden Läuferlagewinkel $\lambda_s$ gegenüber der raumfesten Achse a auf. Die Läuferachsen d, q stellen somit ein gegenüber a, b um den Winkel $\lambda_s$ gedrehtes Koordinatensystem dar. Mit $\lambda_s$ wird ein durch seine kartesischen Koordinaten $\cos \lambda_s$, $\sin \lambda_s$ dargestellter Einheitsvektor bezeichnet, der demnach die Lage der d-Achse ständerorientiert beschreibt. Die läuferorientierte Darstellung des Vektors $i^S$ wird mit $i_L^S = (i_d^S, i_q^S)$ bezeichnet.

Der Fluß selbst wird durch einen Vektor $\psi$ beschrieben, der neben seinem Betrag $\psi$ den Flußwinkel $\varphi$ aufweist. Bezüglich der Läuferachse d ist der Vektor $\psi$ um den Winkel $\varphi_L$ gedreht, so daß durch einen feldparallelen Bezugsvektor $\varphi_1$ und einen dazu senkrechten Bezugsvektor $\varphi_2$ ein kartesisches, gegenüber dem läuferorientierten Bezugssystem d, q um den läuferorientierten Flußwinkel $\varphi_L$ gedrehtes und gegenüber dem ständerorientierten Bezugssystem a, b um den ständerorientierten Flußwinkel $\varphi_s$ gedrehtes Bezugssystem entsteht. Es gilt $\varphi_s = \lambda_s + \varphi_L$. Die Vektoren $\varphi_L = (\cos \varphi_L, \sin \varphi_L)$ und $\varphi_S = (\cos \varphi_S, \sin \varphi_S)$ bezeichnen einen Einheitsvektor, der die Lage des Flusses im läuferorientierten bzw. ständerorientierten Bezugssystem darstellt. Der Vektor $i^S$ wird nunmehr feldorientiert als $i_{\varphi}^S = (i_{\varphi_1}^S, i_{\varphi_2}^S)$ bezeichnet. Das es sich bei $i_s^S$, $i_L^S$ und $i_{\varphi}^S$ um denselben Vektor $i^S$ in verschiedenen Darstellungen handelt, ist der Vektorbetrag $i^S$ invariant ($|i_L^S| = |i^S| = |i_s^S| = i^S$).

Nach Figur 2 wird die Ständerwicklung einer Schenkelpolmaschine 1 über einen Umrichter 2 mit Wechselstrom (Drehstrom) und der Läufer über einen Gleichrichter 3 mit Gleichstrom gespeist. Die Sollwerteingabe für den Ständerstrom wird durch einen Ständerstrom-Sollvektor $i^{S*}$ bezeichnet, der vorteilhaft in feldorientierten Koordinaten ($i_{\varphi}^{S*}$) vorgegeben wird. Eine Steuereinrichtung 4 bildet daraus Steuerspannung, die als Stellgröße für den Ständerstrom ein entsprechendes auf die Ventile des Umrichters 2 arbeitendes Steuergerät 5 ansteuern. Stromrichter 2 und Zündsteuergerät 5 bilden das Stellglied für den Ständerstrom. Entsprechend sind der Gleichrichter 3 und sein Zündsteuergerät 6 das Stellglied für den Erregerstrom. Allgemein werden die Zündsteuergeräte 5 und 6 Stromregler enthalten, wie durch die Istwerteingänge für $i^S$ und $i^E$ angedeutet ist. Die Eingangsgröße $i^*$ für das Erregerstrom-Stellglied wird in einem Erregerstrom-Führungsglied 7 und einer Vorsteuerstufe 8 gebildet. Ferner ist eine Flußbestimmungseinrichtung 9 vorgesehen, die in diesem Fall von den Istwerten für den Erregerstrom und den Ständerstrom sowie von dem an einem Polradlagegeber abgegriffenen Läuferwinkel $\lambda_s$ gespeist ist und eine Modellschaltung der Maschine darstellt.

Um den bevorzugt feldorientiert vorgegebenen Ständerstromsollwert $i_{\varphi}^{S*}$ (feldorientierter Stromwinkel $\varepsilon_{\varphi}^{S*}$) in entsprechende Stellgrößen umzurechnen, liefert die Flußbestimmungseinrichtung den z. B. als Vektor $\varphi_s$ dargestellten ständerorientierten Flußwinkel $\varphi_s$, der einem Vektordreher 10 für den Stromsollwert $i_{\varphi}^{S*}$ so beaufschlagt ist, daß das Bezugssystem des Vektors $i^{S*}$ um den Winkel $\varphi_s$ zurückgedreht wird und somit der Ständerstrom-Sollvektor (entsprechend dem ständerorientierten Stromwinkel $\varepsilon_s^{S*} = \varepsilon_{\varphi}^{S*} + \varphi_s$) nunmehr in seinem ständerorientierten Koordinaten geliefert wird. Dieser ständerorientierte Sollvektor wird dann in einem als 2/3-Komponentenwandler bezeichneten

3

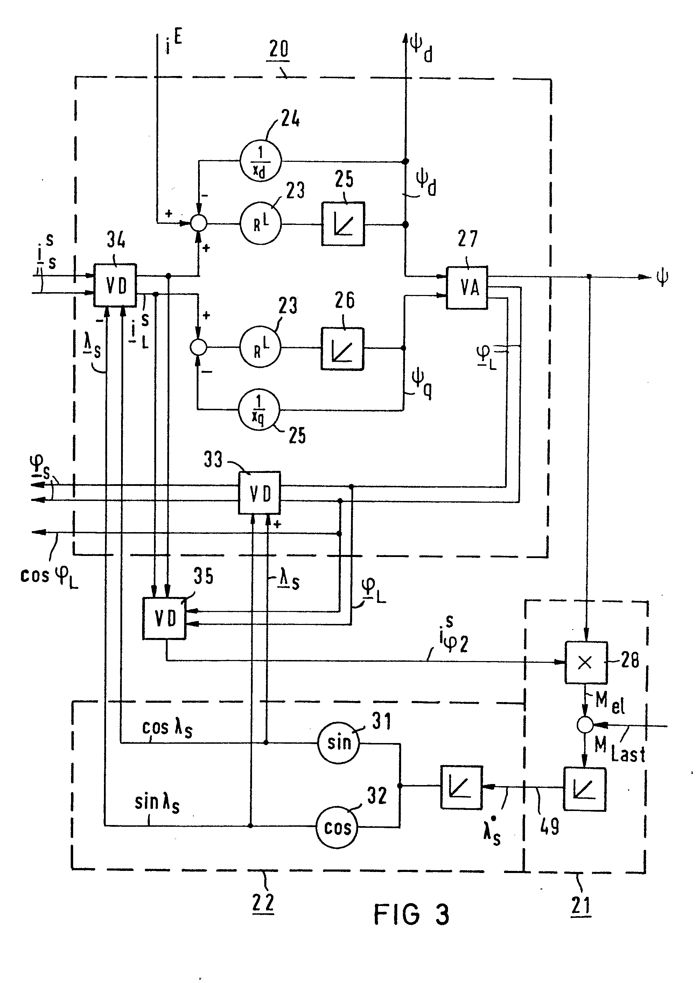

Bauglied 11 in drei, gegeneinander um 120° versetzte Komponenten zerlegt, die als Steuerspannungen für das Ständerstrom-Stellglied dienen, um in den drei Phasen der Ständerwicklung entsprechende Ständerströme zu erzeugen. Vektordreher, Komponentenwandler und die bei anderen Ausführungsformen noch benötigten Vektoranalysatoren sind in ihrem Aufbau in der erwähnten deutschen Auslegeschrift 21 32 178, Figuren 3, 4, 5 und 7 erläutert.

Dem Erregerstrom-Führungsglied 7 ist der Flußsollwert in Form seines Betrages $\psi^*$ vorgegeben. Bei Kenntnis der Hauptinduktivität x der Synchronmaschine kann gemäß $\psi = x \cdot i\mu$ der zugehörige Magnetisierungsstrom $i\mu^* = \psi^*/x$ gebildet werden. Der Magnetisierungsstrom ist die feldparallele, zum Aufbau des Feldes benötigte Komponente der Gesamtdurchflutung. Letztere setzt sich aus dem Ständerstrom $i^s$, dem Erregerstrom $i^E$ und dem Dämpferstrom $i^D = (1/R^L) \cdot (d\psi/dt)$ zusammen, wobei der Erregerstrom zur d-Achse parallel ($i_d^E = i^E$, $i_q^E = 0$) und der Dämpferstrom bei konstantem Flußbetrag zur Feldachse senkrecht ($i\varphi_1^D = 0$, $i\varphi_2^D = i^D$) ist. Bei Vollpolmaschinen, bei denen die Längskomponente $x_d$ und die Querkomponente $x_q$ der Hauptfeldinduktivität gleich sind ($x = x_q = x_d$) kann nach der Ermittlung des Magnetisierungsstrom-Sollwertes $i\mu^* = \psi^*/x$ (Proportionalglied 12) durch Abzug der feldparallelen Komponente des Ständerstrom-Sollwertes oder -Istwertes demnach die feldparallele Komponente $i\varphi_1^{E*} = i^{E*} \cos \varphi_1$ des Soll-Erregerstromes $i^{E*}$ gebildet werden (Subtraktionsstelle 13). Auf diese Berücksichtigung des Ständerstromes kann aber auch verzichtet werden, wenn der Einfluß feldparallelen Ständerstromkomponente vernachlässigbar ist (z. B. wenn $i\varphi_1^{S*} = 0$ gesetzt wird). Durch Division mit $\cos \varphi_L$, dessen Größe dem Flußbestimmungsglied 9 entnommen werden kann, kann der Sollwert für den Erregerstrombetrag $i^{E*}$ gebildet werden.

Das Führungsglied 7 ermittelt aber nur für eine Vollpolmaschine ($x = x_q = x_d$) den richtigen Erregerstrom-Sollwert. Gemäß der Erfindung wird im Führungsglied 7 auch bei einer Schenkelpolmaschine ein Erregerstromsollwert erzeugt, wenn die Unsymmetrie der Hauptfeldinduktivität vernachlässigt und als der Hauptinduktivität zugeordneter Induktivitätsparameter lediglich die Querinduktivität der Schenkelpolmaschine eingegeben ist. Dieser Erregerstromwert ist dann wegen der vernachlässigten Unsymmetrie nur ein fiktiver Erregerstromsollwert. Man erhält dann jeweils nur fiktive Werte $i_o\mu$, $i_o^E$ für den Magnetisierungsstrom und den Erregerstrom, die nur bei einer Vollpolmaschine dem vorgegebenen Flußsollwert $\psi^*$ zugeordnet wären. Gemäß der Erfindung wird nun dieser Erregerstromwert $i_o^{E*}$ als eine gestörte Größe für den Erregerstrom-Sollwert betrachtet. Die dem Erregerstrom-Stellglied vorgeschaltete Vorsteuerstufe 8 bildet nun die Eingangsgröße des Erregerstrom-Stellgliedes aus diesem (gestörten) Erregerstromwert und einer Störgröße, wobei die Störgröße aus der Längskomponente $\psi_d$ des mittels der Flußbestimmungseinrichtung bestimmten Flusses und Maschinenparametern zusammengesetzt ist, die die Querinduktivität $x_q$ und die Längsinduktivität $x_d$ der Schenkelpolmaschine beschreiben. Die Rechtfertigung hierfür wird später gegeben. Vorzugsweise wird als Störgröße das Produkt aus der Längskomponente $\psi_d$ des Flusses und der Differenz $1/x_q - 1/x_d$ des reziproken Quer- und Längsinduktivitätsparameters gebildet.

Figur 3 zeigt ein aus einem elektrischen Teil 20 und einem mechanischen Teil 21 aufgebautes Ersatzschaltbild für die Synchronmaschine, wobei mit 22 ein Vektoroszillator dargestellt ist, der die Rückwirkung der Läuferdrehzahl $\lambda_s$· auf den elektrischen Teil der Maschine bewirkt.

Im elektrischen Teil 20 wird der Fluß $\psi$ durch Integration des Dämpferstromes $i^D = - (1/R^L) (d\psi/dt)$ in den läuferorientierten Koordinaten gebildet, wobei der Läuferwiderstand $R^L$ an den Proportionalgliedern 23 und anstelle der reziproken Induktivität jeweils die entsprechenden reziproken Parameter $x_d$, $x_q$ an den Proportionalgliedern 24, 25 eingestellt werden können, sowie die Integratoren 25 und 26 benötigt werden. Erhalten wird ein Fluß-Modellwert $\psi$ in Form seiner läuferorientierten Komponenten $\psi_d$, $\psi_q$, aus dem ein Vektoranalysator 27 den Flußbetrag $\psi$ sowie den läuferorientierten Flußwinkel $\varphi_L$ in Form des Richtungsvektors $\varphi_L = (\cos \varphi_L, \sin \varphi_L)$ bildet.

Das elektrische Drehmoment $M_{el}$ der Maschine ergibt sich aus dem Produkt des Flusses $\psi$ und der feldsenkrechten Ständerstromkomponente $i\varphi_2^S$ (Multiplizierer 28). Die Differenz zwischen dem elektrischen Drehmoment und dem von der angeschlossenen mechanischen Last hervorgerufenen Drehmoment $M_{Last}$ bestimmt die Läuferbeschleunigung, aus der durch Integration (Ausgang 49) die Läuferdrehzahl $\lambda_s$· erhalten wird.

Nochmalige Integration liefert den Läuferlagewinkel $\lambda_S$, dem die Funktionen (Funktionsbildner 31, 32) $\cos \lambda_S$ und $\sin \lambda_S$ zugeordnet sind. Wird nun der vom Vektoranalysator 27 gelieferte, in Feldrichtung zeigende Einheitsvektor $\varphi_L$ mittels eines Vektordrehers 33 entsprechend $\varphi_s = \varphi_L + \lambda_S$ um diesen Läuferlagewinkel $\lambda_S$ in das ständerorientierte Bezugssystem vorgedreht, so erhält man den ständerorientierten Flußwinkel $\varphi_S$ bzw. dessen Richtungsvektor $\varphi_S$. Außerdem ist mittels $\lambda_S$ und des Vektordrehers 34 die Transformation des ständerorientiert vorgegebenen Stromvektors $i_s^S$ in den für die Lösung der Differenzialgleichungen erforderlichen läuferorientierten Stromvektor $i_L^S$ möglich, aus dem außerdem mittels eines Vektordrehers 35 die zur Bildung des elektrischen Drehmoments erforderliche feldsenkrechte Ständerstromkomponente $i\varphi_2^S$ berechnet werden kann.

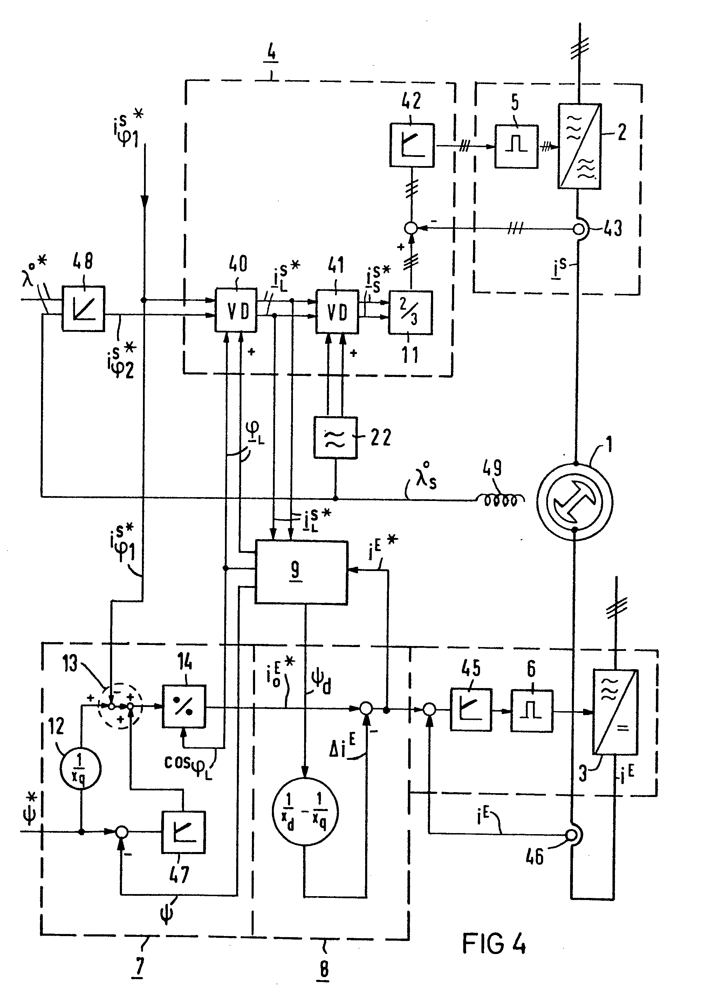

Von dem in Fig. 3 dargestellten Strukturbild der gesamten Synchronmaschine wird für die Flußermittlung nur der elektrische Teil 20 benötigt und im Modell nachgebildet, während die Läuferfrequenz $\lambda_S$· direkt von einem Drehzahlgeber an der Läufersachse abgegriffen werden kann. Sofern das elektrische Drehmoment nicht als Istwert für eine Drehmomentregelung benötigt wird, können also die Elemente 28, 21 und 35 entfallen. Anstelle der Schaltgruppe 22 kann ein Vektoroszillator verwendet werden, der von einer zu $\lambda_S$· proportionalen Spannung gesteuerte Sinusgeneratoren enthalten kann, die zwei gegeneinander um 90° phasenverschobene Ausgangssignale erzeugen. Die für eine feldorientierte Maschinensteuerung erforderliche Information über den Fluß und seine Richtung $\gamma_L$ wird letztlich nur von der Modellschaltung 20 geliefert, wobei anstelle der in Figur 2 und 3 verwendeten Istwerte ebenso gut, wie in Figur 4 dargestellt, die Sollwerte verwendet werden können.

Bei der in Figur 4 gezeigten Vorrichtung wird der Ständerstrom-Steuereinrichtung 4 der Ständerstrom-Sollwert wiederum in den feldorientierten Komponenten $i\varphi_1^{S*}$, $i\varphi_2^{S*}$ vorgegeben. Mittels zweier Vektordreher 40, 41 wird der Ständerstrom-Sollvektor nacheinander um den läuferorientierten Flußwinkel $\varphi_L$ und den Läuferstellungswinkel $\lambda_S$ gedreht und dadurch in den ständerorientierten Sollvektor $i_s^{S*}$ überführt. Zwischen den beiden Vektordrehern kann der nunmehr in läuferorientierten Koordinaten vorgegebene Sollvektor $i_L^{S*}$ direkt in die Flußermittlungseinrichtung 9 eingegeben werden, und da außerdem der ständerorientierte Flußwinkel $\varphi_S$ nicht benötigt wird, kann im Prinzip als Flußermittlungseinrichtung 9 die Modellschaltung 20 aus Figur 3 (ohne die Vektordreher 33 und 34) verwendet werden.

Ferner ist ein Regler 42 vorgesehen, der die an einem Meßglied 43 erfaßten, dem Vektor $i^S$ entsprechenden Phasenströme den am Komponentenwandler 11 abgegriffenen Sollwerten nachführt. Ebenso kann ein Erregerstromregler 45 vorgesehen sein, der den am Meßglied 46 abgegriffenen Erregerstrom-Istwert $i^E$ dem im Führungsglied 7 ermittelten und korrigierten Erregerstromwert $i^{E*} = i_0^E{}^* + \Delta i^E$ nachführt. Arbeitet der Regler 45 hinreichend genau ($i^E = i^{E*}$), so kann anstelle des Erregerstrom-Sollwertes $i^{E*}$ auch der Istwert $i^E$ eingegeben werden ; wesentlich ist nur, daß bei Verwendung der Modellschaltung 20 nach Figur 3 lediglich der durch die Störgröße kompensierte (« wahre ») Erregerstrom als Ist- oder Sollwert eingegeben wird.

Der Vollständigkeit wegen ist im Führungsglied 7 auch noch ein Flußregler 47 dargestellt, an dessen Eingang die Regelabweichung aus dem vorgegebenen Flußsollwert $\psi^*$ und dem in der Modellschaltung 9 ermittelten Flußbetrag $\psi$ eingegeben ist. Die Regelabweichung wirkt korrigierend auf die Subtraktionsstelle 13, an der die feldparallele Komponente des gestörten Erregerstroms $i_0^{E'} = \psi^*/x - i\varphi_1^{S*}$ gebildet wird. Bei der erfindungsgemäßen Führung des Erregerstroms ist das Ausgangssignal des Erregerstromreglers 45 praktisch bereits konstant und der Flußregler 47 ist bereits so stark entlastet, daß er ohne Verschlechterung der Dynamik praktisch entfallen kann.

Die Anordnung wird vervollständigt durch einen Drehzahlregler 48, dem als Istwert die an der Welle abgegriffene Läuferdrehzahl $\lambda_S$· und ein entsprechender Drehzahl-Sollwert $\lambda^*$ eingegeben sind. Das Reglerausgangssignal liefert den Sollwert $i\varphi_2^{S*}$ für die feldsenkrechte Komponente des Ständerstrom-Sollvektors. Der zur Umwandlung der Drehzahl in den die Läuferlage beschreibenden Vektor $\lambda_s$ dienende Vektoroszillator 22 ist im Zusammenhang mit Figur 3 bereits erläutert, wobei die Läuferdrehzahl $\lambda_s$· von einem Drehzahlgeber 49 anstelle einer Nachbildung des mechanischen Teils 21 abgegriffen ist.

In Figur 5 ist die als Flußbestimmungseinrichtung verwendete Modellschaltung 9 im Zusammenwirken mit den Schaltgruppen 4, 7 und 8 noch einmal dargestellt, wobei die Regler 42, 45 und 47 nur gestrichelt symbolisiert sind, da der Regler 45 mit einer so kurzen Regelzeit ausgestattet werden kann, daß der Erregerstromistwert $i^E$ und Erregerstrom-Sollwert $i^{E*}$ praktisch gleich sind. Der Regler 42 hat für die weitere Betrachtung des Steuervorgangs keine Bedeutung, und der Regler 47 ist ohnehin durch die Vorsteuerung so weit entlastet, daß er praktisch ohne Beeinträchtigung des Verhaltens der gesamten Anordnung weggelassen werden kann.

Figur 5 liefert nun auch die Rechtfertigung für das Wesen der Erfindung, wonach zunächst aus dem Quotienten $\psi^*/x_q$ ein fiktiver (d. h. gestörter) Erregerstromwert $i_0^{E*}$ gebildet und nachher durch die entsprechend gewählte Störgröße praktisch exakt kompensiert wird.

Da der Erregerstrom nur eine d-Komponente besitzt, läßt sich der zu einem vorgegebenen Fluß bei vorgegebenem Ständerstrom gehörende Erregerstrom unter Berücksichtigung des Dämpferstromes $R^L \cdot i^D = d\psi/dt$ schreiben :

$$i^E = i_d^u - i_d^s - \frac{1}{R^L} \cdot \frac{d\psi_d}{dt}.$$

Mit Hilfe der Beziehungen

$$\frac{1}{x_d} = \frac{1}{x_q} - \frac{1}{x_q} + \frac{1}{x_d}; \frac{1}{x_d} \cdot \psi_d = i_d^u$$

folgt daraus

$$i^E = \underbrace{\frac{1}{x_q} \cdot \psi_d - i_d^s - \frac{1}{R^L} \cdot \frac{d\psi_d}{dt}}_{i_0^E} - \underbrace{\left(\frac{1}{x_q} - \frac{1}{x_d}\right) \cdot \psi_d}_{\Delta i^E} \cdot$$

Dabei ist $i_0^E$ der zum Fluß $\psi$, dem Ständerstrom $i^S$ und der Hauptfeldinduktivität $x_q$ gehörende fiktive Erregerstrom einer fiktiven Vollpolmaschine ($x = x_q$), deren fiktiver Magnetisierungsstrom durch die feldparallele Komponente der Summe aus fiktivem Erregerstrom und dem Ständerstrom gegeben ist, so daß für den Fall, daß der Fluß auf einen konstanten Betrag geregelt ist, gilt :

$$\frac{\psi}{x_q} = i_0^u = (i_0^E \cos \varphi_L + i_{\varphi 1}^S) \ .$$

Zum Flußsollwert $\psi^*$ gehört demnach ein Erregerstrom-Sollbetrag

$$i^{E*} = \left( \frac{\psi^*}{x_q} - i_{\varphi 1}^s \right) / \cos \varphi_L - \Delta i^E$$

oder ein Erregerstromvektor, der z. B. feldorientiert durch

$$i_{\varphi 1}^{E*} = \frac{\psi^*}{x_q} - i_{\varphi 1}^s - \Delta i^E \cdot \cos \varphi_L \ ,$$

$$i_{\varphi 2}^{E*} = \left( \frac{\psi^*}{x_q} - i_{\varphi 2}^s \right) \frac{\sin \varphi_L}{\cos \varphi_L} - \Delta i^E \cdot \sin \varphi_L$$

bestimmt ist.

Die schaltungsmäßige Realisierung dieser Zusammenhänge erfolgt in dem Erregerstrom-Führungsglied 7 und im Vorsteuerglied 8 in den Figuren 2, 4 und 5.

Wesentlichstes Ergebnis der Betrachtung ist, daß bei dieser Ermittlung des fiktiven Erregerstromwertes die Vernachlässigung der Induktivitäts-Unsymmetrie einen Fehler darstellt, der lediglich auf die Ermittlung des wahren Erregerstromes wirkt und durch eine entsprechende Störgröße allein unter Berücksichtigung eines Unsymmetrie-Maschinen-parameters und des tatsächlichen Flusses (der prinzipiell auch durch Hallsonden erfaßbar ist) leicht korrigierbar ist. Dies ist überraschend, da an sich zu erwarten ist, daß der zu dem Ständerstrom, dem momentanen Läuferwinkel und Flußwinkel sowie dem fiktiven Erregerstromwert gehörende Fluß sich nicht als einfache Funktion des wahren Flusses und des Erregerstromes oder anderer, für einen feldorientierten Betrieb ohnehin erfaßter Größen darstellen läßt und daher die zur Korrektur als Störgröße benötigte Abweichung zwischen fiktivem Erregerstrom und wahrem Erregerstrom eine komplizierte, u. U. nur näherungsweise angebbare Funktion vieler den augenblicklichen Betriebszustand beschreibender Größen ist.

Da der Erregerstromwert $i_o^{E*}$ der zum Flußsollwert $\psi^*$ gehörende fiktive Erregerstrom einer Vollpolmaschine ist, kann nunmehr die Anordnung nach Figur 5 weiter so vereinfacht werden, daß als Flußermittlungseinrichtung nicht eine Modellschaltung der tatsächlich angewendeten Schenkelpolmaschine, sondern eine Modellschaltung einer Vollpolmaschine mit $x = x_q$ verwendet wird, wobei dann anstelle des tatsächlichen Erregerstrom-Istwertes bzw. Erregerstromsollwerts der fiktive Erregerstromwert $i_o^{E*}$ herangezogen wird.

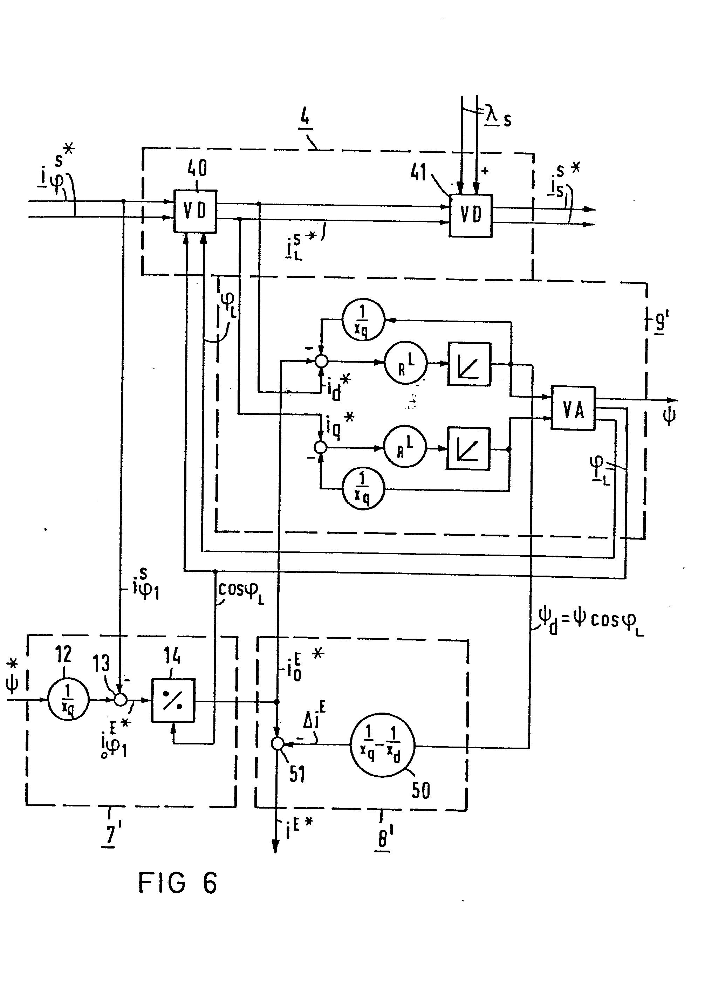

Figur 6 zeigt eine derartige Schaltung, bei der die Schaltungsanordnung 9' aus eingegebenen Werten für den Ständerstrom $i\varphi^{S*}$, den Läuferwiderstand $R^L$ und einen der Hauptinduktivität zugeordneten Induktivitätsparameter sowie einem Erregerstromwert einen Fluß-Modellwert $\varphi_L$ nachbildet, wobei gemäß der Erfindung als Induktivitätsparameter ein einer Vollpolmaschine zugeordneter Parameter, bevorzugt wie im dargestellten Fall die Querinduktivität $x_q$ der Schenkelpolmaschine, und als Erregerstromwert der fiktive Erregerstrom $i_o^{E*}$ verwendet wird. Der fiktive Erregerstromwert wird im vorgeschalteten Rechenglied 7' aus dem vorgegebenen Fluß $\psi^*$, dem Induktivitätsparameter $x_q$ und dem vorgegebenen Ständerstrom (gemäß Fig. 6 wird nur die feldparallele Komponente $i\varphi_1^{S*}$ benötigt) ermittelt. In der Ausgangsstufe 8' wird die zum Fluß $\psi^*$ gehörende Größe $i^{E*}$ des wahren Erregerstroms aus dem fiktiven Erregerstromwert $i_o^{E*}$ und der Störgröße $\Delta i^E$ ermittelt, die aus dem Flußmodellwert $\psi$ (gemäß Fig. 6 wird nur die läuferorientierte Längskomponente $\psi_d$ benötigt) und den Parametern für die Längsinduktivität $x_d$ und die Querinduktivität $x_q$ zusammengesetzt ist. Die Störgröße $\Delta i^E$ kann gemäß Fig. 6 am Proportionalglied 50 als Produkt $[(1/x_q) - (1/x_d)] \cdot \psi_d$ gebildet und am Subtraktionsglied 51 negativ auf $i_o^{E*}$ aufgeschaltet werden.

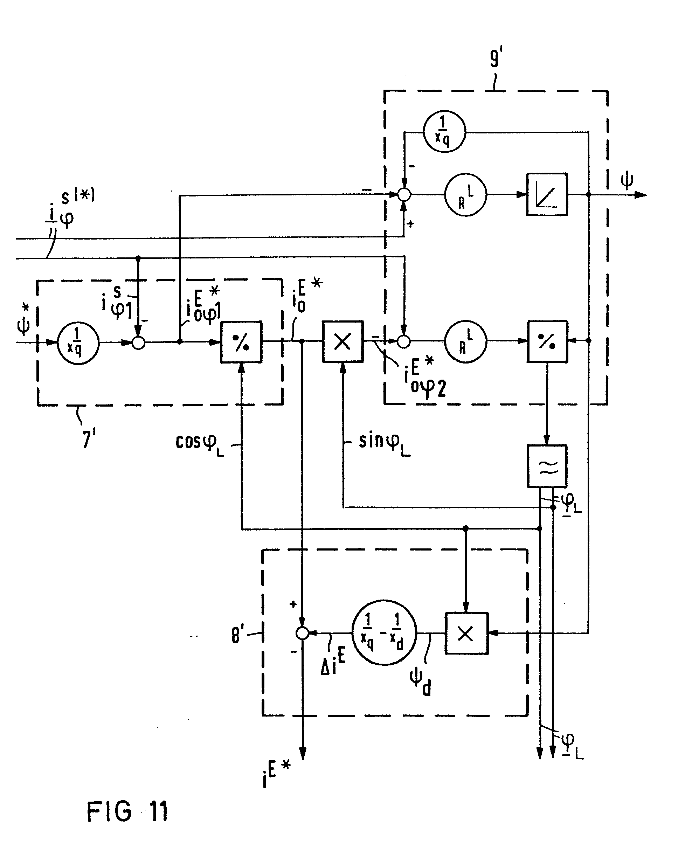

Die Anordnung 7', 8', 9' kann anstelle der Anordnung 7, 8, 9 in Fig. 4 und 5 verwendet werden, um aus Sollwerten oder Istwerten (ähnlich der später erläuterten Figur 11) des Ständerstromes den zum Flußsollwert $\psi^*$ gehörenden Erregerstromsollwert zu bilden. Sie kann aber auch allgemein als Modellschaltung dazu dienen, bei einem vorgegebenen Fluß den zugehörigen Erregerstrom zu ermitteln.

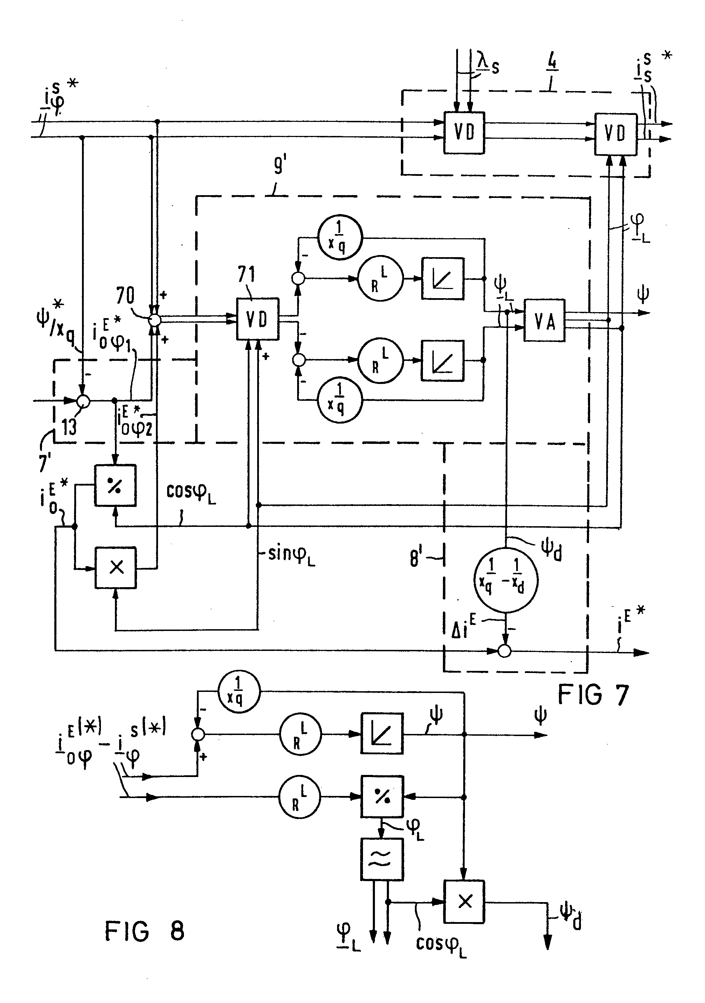

Figur 7 zeigt eine Modifikation von Figur 6, wobei der entsprechenden Schaltungsanordnung 9' als Erregerstromwert nicht der Betrag $i_o^{E*}$ des fiktiven Erregerstroms, sondern seine beiden Komponenten $i_{o\varphi 1}^{E*} = i_o^{E*} \cdot \cos \varphi_L$ und $i_{o\varphi 2}^{E*} = i_o^{E*} \cdot \sin \varphi_L$ zugeführt werden. Durch komponentenweises Addieren zum feldorientierten Ständerstrom $i^{S*}$ (Additionsglied 70) entsteht ein feldorientierter Stromvektor, der ins läuferorientierte Bezugssystem transformiert wird (Vektordreher 71). Die Schaltungsanordnung 9' ermittelt zu dem fiktiven Erregerstromwert den dazugehörigen Fluß einer ebenso fiktiven Vollpolmaschine mit $x = x_q$, wobei überraschenderweise dieser Fluß eine Nachbildung des zum wahren Erregerstrom $i^E$ bzw. $i^{E*}$ gehörenden (wahren) Flusses $\psi$ ist, so daß die Anordnung 9' als Flußermittlungseinrichtung dienen kann und in der in Fig. 7 gezeigten Weise eine in Fig. 4

entsprechende Anordnung ergibt. Die Schaltungsanordnung 9′ kann allgemein als Schaltungsanordnung zur Nachbildung eines Fluß-Modellwertes innerhalb einer Modellschaltung 7′, 8′, 9′ verwendet werden, wie sie anhand Fig. 6 bereits beschrieben wurde, sofern sichergestellt ist, daß der feldorientiert eingegebene Ständerstrom dem in feldorientierten Koordinaten dargestellten Ist-Strom der der Modellschaltung zugeordneten Maschine entspricht.

Da die Schaltungsanordnung nach Fig. 6 und 7 nunmehr mit einem symmetrischen Induktivitätsparameter $x_q$ arbeitet, gelingt jetzt auch die Lösung der entsprechenden Differentialgleichung im feldorientierten System, wie sie in der eingangs erwähnten deutschen Patentanmeldung P 30 26 202, Fig. 5, bereits angegeben ist. Fig. 8 zeigt einen entsprechenden Aufbau einer derartigen Schaltungsanordnung zur Nachbildung des Flusses. Eingangsvektor dieser Schaltung ist der aus den Sollwerten $i^{S*}$ und $\psi^*/x_q$ am Additionsglied 70 gebildete Vektor $i_O{}^{E*} - i\varphi^{S*}$.

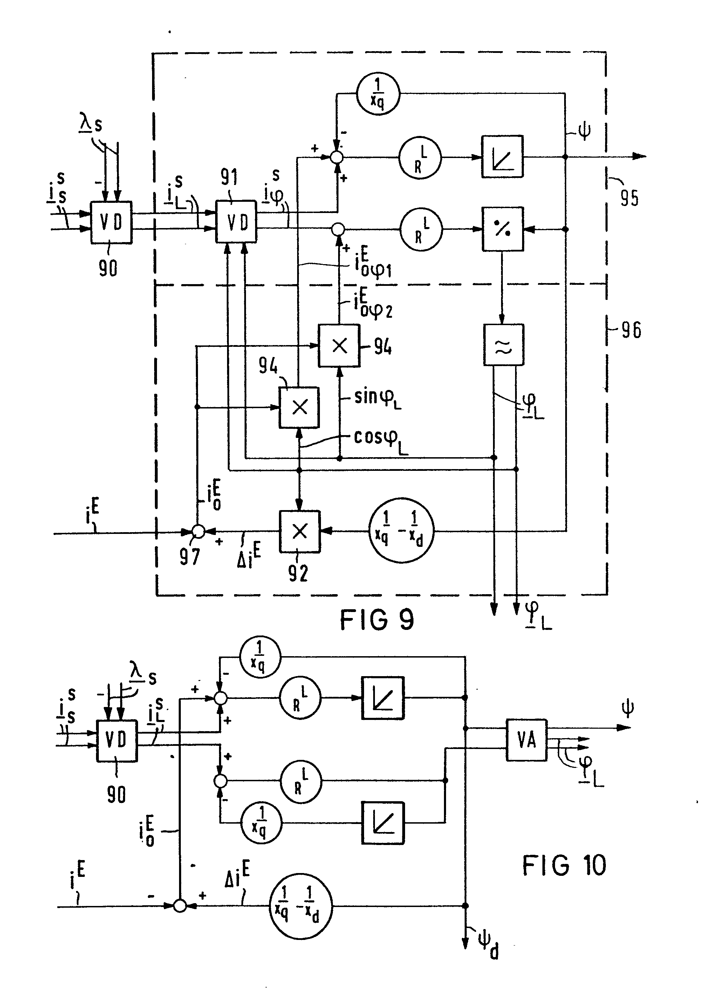

Im allgemeinen ist die dargestellte Speisung mit den Sollwerten vorteilhaft, da sich auf diese Weise ein kompaktes Steuergerät für den Betrieb einer Schenkelpolmaschine ergibt, das allein schon bei Speisung aus den Sollwerten betriebsfähig ist und ohne die zugehörige Schenkelpolmaschine erprobt werden kann. Wenn man jedoch den fiktiven Erregerstromwert — anstatt aus dem Flußsollwert abzuleiten — aus dem wahren Erregerstrom durch Addition der mit Hilfe der Schaltung 9′ ermittelten Störgröße $\Delta i^E$ bildet, so erhält man eine Anordnung, die es gestattet, aus eingegebenen Ist- oder Sollwerten des Ständerstromes, dem Läuferwiderstand und einer vorgegebenen Größe des wahren Erregerstroms sowie einem der Hauptinduktivität zugeordneten Induktivitätsparameter den dazu gehörenden Fluß zu ermitteln. Eine derartige Anordnung ist demnach als von den Istwerten gespeiste Flußbestimmunseinrichtung einer Schenkelpolmaschine in der Vorrichtung nach Fig. 2 einsetzbar. Sie kann auch als entsprechendes Strommdell einer Schenkelpolmaschine für andere Anwendungen, z. B. im Zusammenhang mit der erwähnten deutschen Patentanmeldung P 30 26 202 vorteilhaft sein, selbst wenn damit der Erregerstrom nicht vorgesteuert werden soll. Fig. 9 zeigt eine solche Modellschaltung.

Auch diese Schaltung arbeitet als Modellschaltung für die Schenkelpolmaschine und enthält eine Schaltungsanordnung 95, die aus eingegebenen Werten für den Ständerstrom $i_L{}^s$ (sofern von Meßwerten für die Phasenströme ausgegangen wird, ist eine Ulmwandlung in kartesische Koordinaten und Transformation ins Läuferbezugssystem — vom Läuferstellungswinkel $\lambda_s$ gespeister Vektordreher 90 — jederzeit möglich), den Läuferwiderstand $R^L$ und einen der Hauptfeldinduktivität zugeordneten Induktivitätsparameter sowie einen « fiktiven » Erregerstromwert $i_O\varphi^E$ einen Fluß-Modellwert (Betrag $\psi$, Richtung $\varphi_L$) nachbildet, wobei als Induktivitätsparameter x ein einer Vollpolmaschine (x = const) zugeordneter Induktivitätsparameter, vorzugsweise die Querinduktivität der Schenkelpolmaschine ($x_q$), verwendet ist. Der Erregerstromwert wird hier von einem Rechenglied 96 aus der vorgegebenen Größe des (« wahren ») Erregerstromes ($i^E$) und einer aus dem Flußmodellwert und Parametern für die Längsinduktivität $x_d$ und die Querinduktivität $x_q$ der Schenkelpolmaschine zusammengesetzten Störgröße ermittelt. In dem dargestellten bevorzugten Ausführungsbeispiel ist als Störgröße $\Delta i^E$ das Produkt aus der Längskomponente des Modellflusses (Multiplizierer 92 zur Bildung von $\psi_d = \psi \cdot \cos \varphi_L$) und der Differenz $(1/x_q) - (1/x_d)$ der reziproken Längskomponente und Querkomponente der Hauptinduktivität gebildet und additiv auf den vorgegebenen (wahren) Erregerstrom aufgeschaltet (Additionsglied 97).

Beim Ausführungsbeispiel nach Fig. 9 wird aus dem Betrag $i_O{}^E$ des fiktiven Erregerstromes mittels der Multiplizierer 94 der feldorientierte fiktive Erregerstrom $i_O{}^E = (i_O{}^E \cdot \cos \varphi_L, i_O{}^E \sin \varphi_L)$ gebildet und mit dem durch den Vektordreher 91 feldorientiert vorgegebenen Ständerstrom zur Gesamtdurchflutung zusammengesetzt und entsprechend der bereits bei Fig. 8 erwähnten Weise wird daraus der Modell-Flußbetrag $\psi$ und der Modell-Flußwinkel $\varphi_L$ ermittelt.

Man kann aber zu Flußnachbildung entsprechend Fig. 6 auch läuferorientiert arbeiten. Dabei entfallen die zur Bildung der feldorientierten Komponenten benötigten Elemente 91, 92, 94, wie in Fig. 10 dargestellt ist. Die Modellschaimtungen nach Fig. 9 oder 10 können direkt als Flußermittlungseinrichtung 9 in Fig. 2 oder — ohne den Vektordreher 90 und mit Eingabe des Ständerstromsollvektors anstelle des Istvektors — in Fig. 4 verwendet werden. Da insbesondere bei einer feldorientierten Regelung, wie sie in den Figuren 2 und 4 bis 7 dargestellt ist, der Ständerstrom-Steuereinrichtung 4 ohnehin der Ständerstrom in feldorientierten Soll-Komponenten $i\varphi_1{}^{S*}$, $i\varphi_2{}^{S*}$ vorgegeben ist, empfiehlt es sich, auch der Flußermittlungseinrichtung den Ständerstrom als feldorientierten Sollvektor einzugeben. Es entfallen dann bei Verwendung der Modellschaltung nach Fig. 9 als Flußermittlungseinrichtung auch noch die Vektordreher 90 und 91.

Zuletzt ist in Fig. 11 eine weitere Modellschaltung dargestellt, die unter Verwendung der in Fig. 8 gezeigten Schaltungsanordnung bei eingegebenem Ständerstrom-Istwert oder -Sollwert den zu einem vorgegebenen Fluß $\psi^*$ gehörenden Erregerstrom ermittelt und den Elementen 7′, 8′, 9′ in Fig. 6 entspricht.

Der Vorteil der in den Figuren 6 bis 11 dargestellten Modellschaltungen ist, daß als Schaltungsanordnung 9′ bzw. 95, die zur Nachbildung der Dynamik einer Schenkelpolmaschine dient, die Nachbildung einer Vollpolmaschine verwendet werden kann, wie sie bei entsprechenden Modellschaltungen und Steuerungen für Vollpolmaschinen bekannt und eingesetzt ist. Es ist also nicht erforderlich, jeweils für die Schenkelpolmaschine eine eigene Schaltungsanordnung bereitzustellen. So kann man z. B. für einen « Flußistwert-Rechner » zur Ermittlung des Fluß-Istwertes aus den Istwerten von Ständerstrom und Erregerstrom (Fig. 9 und 10) oder für einen « Erregerstromsollwert-Rechner » zur Ermittlung des zu

**0 065 722**

einem vorgegebenen Fluß-Sollwert gehörenden Erregerstrom-Sollwertes aus den Istwerten oder den die Istwerte steuernden Sollwerten des Ständerstromes (Fig. 6, 7 und 11) jederzeit auf bereits für Vollpolmaschinen gefertigte Schaltungsanordnungen zurückzugreifen. Für die Verwendung bei einer Schenkelpolmaschine braucht lediglich die für die Vollpolmaschine bekannte Schaltungsanordnung durch die Aufschaltung der Störgröße $\Delta i^E$ am Erregerstrom-Eingang oder -Ausgang ergänzt zu werden.

**Ansprüche**

1. Vorrichtung zur Steuerung oder Regelung einer Schenkelpolmaschine, mit einer Flußbestimmungseinrichtung (9) für den magnetischen Fluß (Vektor $\psi$, Betrag $\psi$) der Schenkelpolmaschine (1), einer Ständerstrom-Steuereinrichtung (4), die aus Sollwerten ($i\varphi^{S*}$) für den Ständerstrom eine Stellgröße für den Ständerstrom liefert, und nachgeschaltetem Stellglied (2, 5), einem Erregerstrom-Führungsglied (7), das als Erregerstrom-Führungsgröße ($i_o^{E*}$) aus dem Flußsollwert ($\psi^*$) und dem in der Flußbestimmungseinrichtung (9) bestimmten Fluß und einem eingegebenen, der Hauptinduktivität zugeordneten Induktionsparameter ($x_q$) einen Erregerstromwert ($i_o^{E*}$) bildet und nachgeschaltetem Erregerstrom-Stellglied (3, 6), dadurch gekennzeichnet, daß der dem Erregerstrom-Führungsglied (7) eingegebene Induktionsparameter der Querinduktivität ($x_q$) der Schenkelpolmaschine (1) entspricht, und daß dem Erregerstrom-Stellglied (7) eine Vorsteuerstufe (8) vorgeschaltet ist, die die Eingangsgröße ($i^{E*}$) des Erregerstrom-Stellgliedes aus dem Erregerstromwert ($i_o^{E*}$) und einer Störgröße ($\Delta i_o^E$) bildet, die dem Produkt der Längskomponente ($\psi_d$) des Flusses und der Differenz $(1/x_q) - (1/xd)$ der reziproken Werte für die Quer- und Längsinduktivität proportional ist. (Fig. 2).

2. Vorrichtung nach Anspruch 1, dadurch gekennzeichnet, daß die Störgröße dem Erregerstromwert subtraktiv aufgeschaltet ist (Fig. 2).

3. Vorrichtung nach Anspruch 2, gekennzeichnet durch einen vom Erregerstromwert ($i_o^{E*}$), dem Erregerstrom-Istwert ($i^E$) und der Störgröße ($\Delta i^E$) beaufschlagten Regler (45) für den Erregerstrom (Fig. 4).

4. Vorrichtung nach einem der Ansprüche 1 bis 3, dadurch gekennzeichnet, daß die Flußbestimmungseinrichtung eine Modellschaltung (9) zur Nachbildung des Flußvektors aus eingegebenen Werten für den Ständerstromvektor, den Erregerstrom, die an einem Polradlagegeber abgegriffene Läuferstellung und die Hauptfeldinduktivität enthält (Fig. 2).

5. Vorrichtung nach Anspruch 4, dadurch gekennzeichnet, daß als Werte für den Ständerstrom der Ständerstrom-Sollwert ($i_L^{S*}$, Fig. 4, 5, 6 bzw. $i\varphi^{S*}$, Fig. 7), für den Erregerstrom der von dem Erregerstromführungsglied (7) gebildete Erregerstromwert (Betrag $i_o^{E*}$, Fig. 6, bzw. Vektor $i_o\varphi_1^{E*}$, $i_o\varphi_2^E$, Fig. 7) und als Hauptinduktivität der Querinduktivitätsparameter ($x_q$) eingegeben ist.

6. Vorrichtung nach Anspruch 5, dadurch gekennzeichnet, daß Flußbestimmungseinrichtung der Ständerstrom-Sollwert feldorientiert vorgegeben ist.

7. Vorrichtung nach einem der Ansprüche 1 bis 6, dadurch gekennzeichnet, daß das Erregerstromführungsglied (7) die Differenz aus dem Quotienten von Flußsollwert und Querinduktivität einerseits und der feldparallelen Ständerstromkomponente andererseits bildet und dem Dividendeneingang eines Dividiergliedes zuführt, dessen Divisoreingang vom Cosinus des von der Flußbestimmungs-einrichtung bestimmten läuferorientierten Flußwinkels ($\varphi_L$) beaufschlagt ist (Fig. 2).

8. Vorrichtung nach einem der Ansprüche 1 bis 7, dadurch gekennzeichnet, daß als Sollwert des Ständerstromes die feldorientierten Komponenten eines Ständerstrom-Sollvektors ($i\varphi^{S*}$) eingegeben werden und daß die Ständerstrom-Steuereinrichtung (4) einen Vektordreher (10) enthält, der von einem von der Flußbestimmungseinrichtung (9) gebildeten Winkelsignal ($\varphi_S$) für den ständerorientierten Flußwinkel beaufschlagt ist und den feldorientierten Sollvektor ($i\varphi^{S*}$) in ein ständerorientiertes Bezugssystem transformiert (Fig. 2).

9. Modellschaltung (95, 96) zum Ermitteln des zu einer vorgegebenen Größe ($i^E$) des Erregerstroms gehörenden Flußvektors (Betrag $\psi$, Richtung $\varphi_L$) einer Schenkelpolmaschine, mit einer Schaltungsanordnung (95), die aus eingegebenen Werten für den Ständerstrom ($i_L^S$), Läuferwiderstand ($R^L$) und einen der Hauptinduktivität zugeordneten Induktivitätsparameter ($x_q$) sowie einem Erregerstromwert ($i_o\varphi_1^E$, $i_o\varphi_2^E$) den Flußvektor als Modellwert nachbildet, dadurch gekennzeichnet, daß der Schaltungsanordnung als ein einer Vollpolmaschine zugeordneter Induktivitätsparameter die Querinduktivität ($x_q$) der Schenkelpolmaschine eingegeben ist und daß am Eingabeeingang für den Erregerstromwert ein Rechenglied (96) vorgesehen ist, in dem Bildung einer Störgröße das Produkt ($\Delta i^E = [(1/x_q) - (1/x_d)] \cdot \psi \cdot \cos \varphi_L$) aus der läuferorientierten Längskomponente des Flusses und der Differenz aus der reziproken Längskomponente ($1/x_d$) und Querkomponente ($1/x_q$) der Hauptinduktivität gebildet ist, und daß die Störgröße ($\Delta i^E$) der vorgegebenen Eingabegröße des Erregerstroms ($i^E$) additiv aufgeschaltet ist (Fig. 9, Fig. 10).

10. Verwendung einer Modellschaltung (« Flußistwert-Rechner ») nach Anspruch 9 mit dem Erregerstrom-Istwert als vorgegebener Größe des Erregerstromes und dem Ständerstrom-Istwert als eingegebenen Wert für den Ständerstrom, als Flußbestimmungseinrichtung (9) zur feldorientierten Steuerung oder Regelung einer Schenkelpolmaschine (Fig. 2).

8

11. Modellschaltung (7', 8', 9') zum Ermitteln der zu einem vorgegebenen Fluß ($\psi'^*$) gehörenden Größe ($i^E*$) des Erregerstromes einer Schenkelpolmaschine, mit einer Schaltungsanordnung (9'), die aus eingegebenen Werten für den Ständerstrom ($i\varphi^{S*}$), den Läuferwiderstand ($R^L$) und einen der Hauptinduktivität zugeordnete Induktivitätsparameter ($x_q$) sowie einem Erregerstromwert ($i_o^{E*}$) einen Fluß-Modellwert (Betrag $\psi$, Richtung $\varphi_L$) nachbildet, dadurch gekennzeichnet, daß der Schaltungsanordnung (9') als ein einer Vollpolmaschine zugeordneter Induktivitätsparameter die Querinduktivität ($x_q$) der Schenkelpolmaschine eingegeben ist, daß am Eingabeeingang für den Erregerstromwert ein Rechenglied (7') vorgeschaltet ist, das den der Schaltungsanordnung einzugebenden Erregerstromwert ($i_o^{E*}$) aus dem vorgegebenen Fluß ($\psi^*$) und den eingegebenen Werten für Ständerstrom ($i\varphi^{S*}$) und Querinduktivität ($x_q$) ermittelt, und daß eine Ausgangsstufe (8') vorgesehen ist, in der zur Bildung einer Störgröße ($\Delta i^E$) das Produkt ($\psi_d \cdot [1/x_q - 1/x_d]$) aus der Längskomponente des Modellflusses und der Differenz aus der reziproken Längskomponente und Querkomponente der Hauptfeldinduktivität der Schenkelpolmaschine gebildet ist, und daß die Störgröße dem Erregerstromwert subtraktiv aufgeschaltet ist (Fig. 6, 7, 11).

12. Verwendung einer Modellschaltung (« Erregerstromsollwert-Rechner ») nach Anspruch 11, mit einem Fluß-Sollwert als vorgegebenen Fluß und dem Ständerstrom-Istwert oder einem den Ständerstrom-Istwert führenden Ständerstrom-Sollwert als eingegebenen Wert für den Ständerstrom, als Flußbestimmungseinrichtung (9), Erregerstromführungsglied (7) und -Vorsteuerstufe (8) zur feldorientierten Steuerung oder Regelung einer Schenkelpolmaschine (Fig. 4).

## Claims

1. Arrangement for controlling or regulating a salient pole machine, having a flux-determining device (9) for the magnetic flux (vector $\psi$ magnitude $\psi$) of the salient pole machine (1), a stator current control device (4), which yields a manipulated variable for the stator current from desired values ($i\varphi^{S*}$) for the stator current, and an adjusting member (2, 5) connected at the output side, an exciter current control member (7), which forms an exciter current value ($i_o^{E*}$) as an exciter current command variable ($i_o^{E*}$) from the desired flux value ($\psi^*$) and the flux determined in the flux-determining device (9) and a fed-in induction parameter ($x_q$) associated with the principal inductance, and exciter current adjusting member (3, 6) connected at the output side, characterised in that the induction parameter fed into the exciter current control member (7) corresponds to the transverse inductance ($x_q$) of the salient pole machine (1), and that an anticipatory control stage (8) is connected to the input side of the exciter current adjusting member (7), which stage forms the input variable ($i^E*$) of the exciter current adjusting member from the exciter current value ($i_o^{E*}$) and a disturbance variable ($\Delta i_o^E$), which is proportional to the product of the longitudinal component ($\psi_d$) of the flux and of the difference ($1/x_q$) − ($1/x_d$) between the reciprocal values for the transverse and longitudinal inductance. (Fig. 2).

2. Arrangement according to claim 1, characterised in that the disturbance variable is subtractively superimposed on the exciter current value (Fig. 2).

3. Arrangement according to claim 2, characterised by a regulator (45) for the exciter current acted upon by the exciter current value ($i_o^{E*}$), the actual exciter current value ($i^E$) and the disturbance variable ($\Delta i^E$). (Fig. 4).

4. Arrangement according to one of the claims 1 to 3, characterised in that the flux determining device comprises a model circuit (9) for the reproduction of the flux vector from fed-in values for the stator current, the exciter current, the rotor position measured on a magnet wheel position indicator and the principal field inductance (Fig. 2).

5. Arrangement according to claim 4, characterised in that the desired stator current value ($i_L^{S*}$, Figs. 4, 5, 6, or $i\varphi^{S*}$, Fig. 7) is fed in as a value for the stator current, the exciter current value (amount $i_o^{E*}$, Fig. 6, or vector $i_o\varphi_1^{E*}$, $i_o\varphi_2^{E*}$, Fig. 7) formed by the exciter current control member (7) as a value for the exciter current, and the transverse inductance parameter ($x_q$) as the principal inductance.

6. Arrangement according to claim 5, characterised in that the desired stator current value in advanced to the flux determining device in a field-orientated manner.

7. Arrangement according to one of the claims 1 to 6, characterised in that the exciter current control member (7) forms the difference between the quotient of the desired flux value and transverse inductance on the one hand, and the field parallel stator current component on the other hand, and feeds it to the dividend input of a dividing member, whose divisor input is acted upon by the cosine of the rotor-orientated flux angle ($\varphi_L$) determined by the flux determining device (Fig. 2).

8. Arrangement according to one of the claims 1 to 7, characterised in that the field-orientated components of a desired stator current vector ($i\varphi^{S*}$) are fed in as a desired value of the stator current, and in that the stator current control device (4) comprises a vector rotator (10), which is acted upon by an angle signal ($\varphi_S$) for the stator-orientated flux angle formed by the flux determining device (9) and transforms the desired field-orientated vector ($i\varphi^{S*}$) into a stator-orientated reference system (Fig. 2).

9. Model circuit (95, 96) for determining the flux vector (magnitude $\psi$, direction $\varphi_L$) of a salient pole machine belonging to a predetermined variable ($i^E$) of the exciter current, with a circuit arrangement (95) which reproduces the flux vector as a model value from fed-in values for the stator current ($i_L^S$), rotor resistance ($R^L$) and an inductance parameter ($x_q$) associated with the principal inductance as well as from an exciter current value ($i_o\varphi_1{}^E$, $i_o\varphi_2{}^E$), characterised in that the transverse inductance ($x_q$) of the salient pole machine is fed into the circuit arrangement as an inductance parameter associated with a full pole machine, and that at the feed-in input for the exciter current value there is provided a calculating element (96) in which, for forming a disturbance variable, the product ($\Delta i^E = [(1/x_q) - (1/x_d)] \cdot \psi \cdot \cos \varphi_L$) is formed from the rotor-orientated longitudinal component of the flux and the difference between the reciprocal longitudinal component ($1/x_d$) and transverse component ($1/x_q$) of the principal inductance, and in that the disturbance variable ($\Delta i^E$) is additively superimposed on the predetermined input variable of the exciter current ($i^E$) (Fig. 9, Fig. 10).

10. Use of a model circuit (« actual flux value calculator ») according to claim 9, with the actual exciter current value as a predetermined variable of the exciter current and the actual stator current value as a fed-in value for the stator current, as a flux determining device (9) for the field-orientated control or regulation of a salient pole machine (Fig. 2).

11. Model circuit (7′, 8′, 9′) for determining the variable ($i^{E*}$), belonging to a predetermined flux ($\psi^*$), of the exciter current of a salient pole machine, with a circuit arrangement (9′) which reproduces a flux-model value (magnitude $\psi$, direction $\varphi_L$) from fed-in values for the stator current ($i_\varphi{}^{S*}$), the rotor resistance ($R^L$) and an inductance parameter ($x_q$) associated with the principal inductance, as well as from an exciter current value ($i_o{}^{E*}$), characterised in that the transverse inductance ($x_q$) of the salient pole machine is fed into the circuit arrangement (9′) as an inductance parameter associated with a full pole machine, a calculating member (7′) precedes the feed-in input for the exciter current value, this member determining the exciter current value ($i_o{}^{E*}$) to be fed into the circuit arrangement from the predetermined flux ($\psi^*$) and the fed-in values for stator current ($i^{S*}$) and the transverse inductance ($x_q$), and that an output stage (8′) is provided in which, for the formation of a disturbance variable ($\Delta i^E$), the product ($\psi_d \cdot [1/x_q - 1/x_d]$) is formed from the longitudinal component of the model flux and the difference between the reciprocal longitudinal component and the transverse component of the principal field inductance of the salient pole machine, and that the disturbance variable is subtractively superimposed on the exciter current value (Figs. 6, 7, 11).

12. Use of a model circuit (« desired exciter current value calculator ») according to claim 11, with a desired flux value as a predetermined flux and the actual stator current value or a desired stator current value leading the actual stator current value as a fed-in value for the stator current, as a flux determining device (9), exciter current guide member (7) and an anticipatory control stage (8) for the field-orientated control or regulation of a salient pole machine (Fig. 4).

## Revendications

1. Dispositif pour la commande ou la régulation d'une machine à pôles saillants, comportant un dispositif (9) de détermination du flux magnétique (vecteur $\psi$, valeur $\psi$) de la machine à pôles saillants (1), un dispositif (4) de commande du courant statorique, qui fournit à partir de valeurs de consigne ($i_\varphi{}^{S*}$) du courant statorique, une grandeur de réglage de ce courant, et un circuit de réglage (2, 5) branché en aval de ce dispositif, un circuit (7) de commande du courant d'excitation, qui forme en tant que grandeur de commande du courant d'excitation ($i_o{}^{E*}$), une valeur de ce courant d'excitation à partir de la valeur de consigne du flux ($\psi^*$) et du flux, déterminé dans le dispositif (9) de détermination du flux, et d'un paramètre d'inductance ($x_q$) introduit et associé à l'inductance principale, et un circuit (3, 6) de réglage du courant d'excitation, branché en aval du circuit de commande, caractérisé par le fait que le paramètre d'inductance, introduit dans le circuit (7) de commande du courant d'excitation, correspond à l'inductance principale ($x_q$) de la machine à pôles saillants (1) et qu'en amont du circuit (7) de commande du courant d'excitation se trouve branché un étage de commande pilote (8) qui forme la grandeur d'entrée ($i^{E*}$) du circuit de réglage du courant d'excitation à partir de la valeur du courant d'excitation ($i_o{}^{E*}$) et d'une grandeur d'influence ($\Delta i_o{}^E$), qui est proportionnelle au produit de la composante longitudinale ($\psi_d$) du flux et de la différence ($1/x_q) - (1/x_d$) entre les valeurs inverses de l'inductance transversale et de l'inductance longitudinale (figure 2).

2. Dispositif suivant la revendication 1, caractérisé par le fait que la grandeur d'influence est soustraite de la valeur du courant d'excitation (figure 2).

3. Dispositif suivant la revendication 2, caractérisé par un régulateur (45) servant à régler le courant d'excitation et qui est chargé par la valeur du courant d'excitation ($i_o{}^{E*}$), par la valeur réelle ($i^E$) du courant d'excitation et par la grandeur d'influence ($\Delta i^E$) (figure 4).

4. Dispositif suivant l'une des revendications 1 à 3, caractérisé par le fait que le dispositif de détermination du flux contient un circuit modèle (9) servant à simuler le vecteur du flux à partir de valeurs introduites pour le vecteur du courant statorique, le courant d'excitation, la position du rotor prélevée sur un transmetteur de position à la roue polaire et l'inductance de champ principale (figure 2).

5. Dispositif suivant la revendication 4, caractérisé par le fait que la valeur de consigne du courant statorique ($i_L{}^{S*}$, figures 4, 5, 6 ou $i_\varphi{}^{S*}$, figure 7) est introduite comme valeur pour le courant statorique, que la valeur du courant d'excitation (valeur $i_o{}^{E*}$, figure 6 ou vecteur $i_o\varphi_1{}^{E*}$, $i_o\varphi_2{}^{E*}$, figure 7) formée par le circuit (7) de commande du courant d'excitation est introduite en tant que valeur du courant d'excitation et que le paramètre d'inductance transversal ($x_q$) est introduit en tant que valeur de l'inductance principale.

6. Dispositif suivant la revendication 5, caractérisé par le fait que la valeur de consigne du courant statorique est envoyée, en étant prédéterminée avec une orientation par rapport au champ, au dispositif de détermination du flux.

7. Dispositif suivant l'une des revendications 1 à 6, caractérisé par le fait que le circuit (7) de commande du courant d'excitation forme la différence entre le quotient de la valeur de consigne du flux et de l'inductance transversale d'une part et la composante du courant statorique, parallèle au champ, d'autre part et envoie cette différence à l'entrée du dividende d'un circuit diviseur dont l'entrée du diviseur est chargée par le cosinus de l'angle de flux ($\varphi_L$) orienté par rapport au champ et déterminé par le dispositif de détermination du flux (figure 2).

8. Dispositif suivant l'une des revendications 1 à 7, caractérisé par le fait que la composante, orientée par rapport au champ, d'un vecteur de consigne du courant statorique ($i\varphi^{S*}$) est introduite en tant que valeur de consigne du courant statorique et que le dispositif (4) de commande du courant statorique contient un dispositif de rotation vectorielle (10) qui est chargé par un signal angulaire ($\varphi_S$) formé par le dispositif (9) de détermination du flux et utilisé comme angle du flux, orienté par rapport au stator, et transforme le vecteur de consigne ($i\varphi^{S*}$) orienté par rapport au champ, dans un système de référence orienté par rapport au stator (figure 2).

9. Circuit modèle (95, 96) servant à déterminer le vecteur du flux (valeur $\psi$, direction $\varphi_L$) associé à une grandeur prédéterminée ($i^E$) du courant d'excitation, d'une machine à pôles saillants, comportant un montage (95), qui simule le vecteur du flux en tant que valeur modèle, à partir de valeurs introduites pour le courant statorique ($i_L^S$), pour la résistance ($R^L$) du rotor et pour un paramètre d'inductance ($x_q$) associé à l'inductance principale et pour une valeur du courant d'excitation ($i_o\varphi_1^E$, $i_o\varphi_2^E$), caractérisé par le fait que l'inductance transversale ($x_q$) de la machine à pôles saillants est introduite dans le montage en tant que paramètre d'inductance associé à une machine à pôles lisses, et qu'à l'entrée d'introduction de la valeur du courant d'excitation se trouve prévu un circuit de calcul (96), dans lequel pour la formation d'une grandeur d'influence, on forme le produit ($\Delta i^E = [(1/x_q) - (1/x_d)] \cdot \psi \cdot \cos \varphi_L$) à partir de la composante longitudinale, orientée par rapport au champ, du flux et à partir de la différence obtenue entre l'inverse de la composante longitudinale ($1/x_d$) et de l'inverse de la composante transversale ($1/x_q$) de l'inductance principale, et que la grandeur d'influence ($\Delta i^E$) est ajoutée par addition à la grandeur d'entrée prédéterminée du courant d'excitation ($i^E$) (figures 9, 10).

10. Utilisation d'un circuit modèle (« calculateur de la valeur réelle du flux ») suivant la revendication 9 utilisant la valeur réelle du courant d'excitation en tant que grandeur prédéterminée du courant d'excitation et la valeur réelle du courant statorique en tant que valeur introduite du courant statorique, en tant que dispositif (9) de détermination du flux servant à réaliser la commande ou la régulation, orientée par rapport au champ, d'une machine à pôles saillants (figure 2).

11. Circuit modèle (7', 8', 9') servant à déterminer la grandeur ($i^{E*}$) associée à un flux prédéterminé ($\psi^*$), du courant d'excitation d'une machine à pôles saillants et comportant un montage (9'), qui simule une valeur modèle du flux (valeur $\psi$, direction $\varphi_L$) à partir de valeurs introduites pour le courant statorique ($i\varphi^{S*}$), pour la résistance ($R^L$) du rotor et pour un paramètre d'inductance ($x_q$), associé à l'inductance principale, ainsi que pour une valeur du courant d'excitation ($i_o^{E*}$), caractérisé par le fait qu'un paramètre d'inductance, associé à une machine à pôles lisses, de l'inductance transversale ($x_q$) de la machine à pôles saillants est introduite dans le montage (9'), qu'en amont de l'entrée d'introduction de la valeur du courant d'excitation se trouve branché un circuit de calcul (7') qui détermine la valeur ($i_o^{E*}$) du courant d'excitation, devant être introduite dans le montage, à partir du flux prédéterminé ($\psi^*$) et des valeurs introduites pour le courant statorique ($i\varphi^{S*}$) et l'inductance transversale ($x_q$), et qu'il est prévu un étage de sortie (8') dans lequel pour former une grandeur d'influence ($\Delta i^E$), on forme le produit ($\psi_d \cdot [1/x_q - 1/x_d]$) à partir de la composante longitudinale du flux du modèle et à partir de la différence entre l'inverse de la composante longitudinale et l'inverse de la composante transversale de l'inductance de champ principale de la machine à pôles saillants, et que la grandeur d'influence est soustraite de la valeur du courant d'excitation (figures 6, 7, 11).

12. Utilisation d'un circuit modèle (« calculateur de la valeur de consigne du courant d'excitation ») suivant la revendication 11, avec une valeur de consigne du flux en tant que flux prédéterminé et la valeur réelle du courant statorique ou une valeur de consigne du courant statorique, réglant la valeur réelle de ce courant, en tant que valeur d'entrée pour le courant statorique, comme dispositif (9) de détermination du flux, circuit (7) de commande du courant d'excitation et étage (8) de commande pilote du courant d'excitation pour réaliser la commande ou la régulation, orientée par rapport au champ, d'une machine à pôles saillants (figure 4).

FIG 1

FIG 2

FIG 3

FIG 4

0 065 722

FIG 5

FIG 6

0 065 722

5

FIG 7

FIG 8

FIG 9

FIG 10

FIG 11